# EUROPÄISCHE PATENTSCHRIFT

(11) **EP 3 413 727 B1**
(45) Veröffentlichungstag und Bekanntmachung des Hinweises auf die Patenterteilung: **17.09.2025**
(21) Anmeldenummer: 17703979.9
(22) Anmeldetag: 08.02.2017
(51) Int. Cl.: A23L 33/105, A23L 29/00

(54) **NAHRUNGSERGÄNZUNGSMITTEL ENTHALTEND GUAIJAVERIN UND PHLORETIN ZUR REDUZIERUNG UND/ODER HEMMUNG EINER INTESTINALEN GLUCOSE-RESORPTION**
NUTRITIONAL SUPPLEMENT CONTAINING GUAIJAVERIN AND PHLORETIN FOR REDUCING AND/OR SUPPRESSING AN INTESTINAL GLUCOSE RESORPTION
COMPLÉMENT ALIMENTAIRE CONTENANT DE LA GUAIJAVERINE ET DE LA PHLORETIN POUR RÉDUIRE ET/OU INHIBER UNE RÉSORPTION DE GLUCOSE INTESTINALE

(30) Priorität: 10.02.2016 DE 102016102271; 10.02.2016 DE 102016102265
(43) Veröffentlichungstag der Anmeldung: 19.12.2018
(73) Patentinhaber: PM-International AG, 5445 Schengen (LU)
(72) Erfinder: SORG, Rolf, 5444 Schengen (LU); KÜHNE, Tobias, 54497 Morbach (DE); MESSER, Wilhelm, 54451 Irsch (DE); LAUINGER, Christian, 76275 Ettlingen (DE); WEGHUBER, Julian, 4591 Molln (AT)
(74) Vertreter: Meissner Bolte Partnerschaft mbB
(86) Internationale Anmeldenummer: PCT/EP2017/052672
(87) Internationale Veröffentlichungsnummer: WO 2017/137405

(56) Entgegenhaltungen:
- DE-A1- 10 053 496
- DE-U1- 202013 002 760
- FR-A1- 2 935 096
- KR-A- 20100 109 697
- US-A1- 2008 293 644
- US-A1- 2009 186 110
- US-A1- 2015 313 927
- EL-NAGGAR S F ET AL: "FLAVONOIDS FROM THE LEAVES OF KALMIA LATIFOLIA", JOURNAL OF NATURAL PRODUCTS, AMERICAN CHEMICAL SOCIETY, US, vol. 43, no. 6, 1 November 1980 (1980-11-01), pages 739 - 751, XP001117746, ISSN: 0163-3864, DOI: 10.1021/NP50012A008
- WANG H ET AL: "alpha-Glucosidase and alpha-amylase inhibitory activities of guava leaves", FOOD CHEMISTRY, ELSEVIER LTD, NL, vol. 123, no. 1, 1 November 2010 (2010-11-01), pages 6 - 13, XP027075547, ISSN: 0308-8146, [retrieved on 20100603], DOI: 10.1016/J.FOODCHEM.2010.03.088
- MASAYUKI YOSHIKAWA ET AL: "Antidiabetic Principles of Natural Medicines. II. Aldose Reductase and alpha-Glucosidase Inhibitors from Brazilian Natural Medicine, the Leaves of Myrcia multflora DC. (Myrtaceae): Structures of Myrciacitrins I and II and Myrciaphenones A and B", CHEM PHARM BULL, vol. 46, no. 1, 1 January 1998 (1998-01-01), pages 113 - 119, XP055355268, Retrieved from the Internet <URL:http://ci.nii.ac.jp/lognavi?name=nels&lang=en&type=pdf&id=ART0004117455> [retrieved on 20170315]
- ILJA C. W. ARTS ET AL: "The type of sugar moiety is a major determinant of the small intestinal uptake and subsequent biliary excretion of dietary quercetin glycosides", BRITISH JOURNAL OF NUTRITION, vol. 91, no. 06, 1 June 2004 (2004-06-01), UK, pages 841, XP055355007, ISSN: 0007-1145, DOI: 10.1079/BJN20041123
- V CRESPY ET AL: "Bioavailability of phloretin and phloridzin in rats", THE JOURNAL OF NUTRITION, 1 December 2001 (2001-12-01), United States, pages 3227, XP055355164, Retrieved from the Internet <URL:http://jn.nutrition.org/content/131/12/3227.full.pdf#page=1&view=FitH> [retrieved on 20170315]
- JIANBO XIAO: "Dietary Flavonoid Aglycones and Their Glycosides: Which Show Better Biological Significance?", CRITICAL REVIEWS IN FOOD SCIENCE AND NUTRITION, 15 July 2015 (2015-07-15), USA, pages 1874 - 1905, XP055355033, ISSN: 1040-8398, DOI: 10.1080/10408398.2015.1032400

## Beschreibung

Die Erfindung betrifft ein Nahrungsergänzungsmittel gemäß dem Oberbegriff von Patentanspruch 1.

Nahrungsergänzungsmittel und deren Einsatz, beispielsweise im Sport oder zur Förderung der Gesundheit sind allgemein bekannt. Nahrungsergänzungsmittel sind dazu bestimmt, die allgemeine Ernährung, bestehend beispielsweise aus kohlenhydrat- oder eiweißhaltigen Lebensmitteln, wie Nudeln, Fleisch oder dergleichen, oder auch Süßwaren, wie Kuchen oder Kekse zu ergänzen oder bekömmlicher zu gestalten, indem die Nahrungsmittel durch das Nahrungsergänzungsmittel beispielsweise kalorienreduziert werden oder in dem eine Kalorienaufnahme durch das Nahrungsergänzungsmittel reduziert wird.

Im Gegensatz zu konventionellen Lebensmitteln und Getränken stellen Nahrungsergänzungsmittel üblicherweise ein Konzentrat von Nahrungsergänzungsstoffen oder sonstigen Stoffen mit ernährungsspezifischer physiologischer Wirkung dar. Sie werden gewöhnlich in dosierter Form, insbesondere in Form von Kapseln, Pastillen, Tabletten, Pillen, Brausetabletten und ähnlichen Darreichungsformen, Pulverbeuteln, Flüssigampullen, Flaschen mit Tropfeinsätzen und ähnlichen Darreichungsformen von Flüssigkeiten und Pulvern zur Aufnahme in abgemessenen Kleinmengen vertrieben.

Üblicherweise umfassen Nahrungsergänzungsmittelpräparate eine Vielzahl von Nahrungsergänzungsstoffen, wie Vitamine und/oder Mineralstoffe in einem vorbestimmten Verhältnis. Weitere typische Inhaltsstoffe sind Antioxidantien, die ebenfalls in einem vorbestimmten Verhältnis dosiert sind.

Im Gegensatz zu den meisten bekannten Nahrungsergänzungsmittel, durch die für einen Konsumenten Stoffe bereitgestellt werden, die der Konsument in einer bestimmten Situation, wie beispielsweise beim Sport benötigt, besteht in neuerer Zeit ein weiteres Ziel von Nahrungsergänzungsmitteln darin eine Bioverfügbarkeit eines bestimmten Stoffs, wie beispielsweise von Zucker, d.h. Saccharose, Glucose und/oder Fructose, gezielt zu beeinflussen, respektive einzustellen, so dass beispielsweise nur ein Teil des jeweiligen Zuckers aufgenommen oder eine Zuckeraufnahme ganz vermieden wird.

Unter Bioverfügbarkeit wird im Rahmen dieser Erfindung insbesondere eine pharmakologische Messkurve für den Anteil eines Wirkstoffes verstanden werden, der unverändert im systemischen Kreislauf, nämlich insbesondere Blutkreislauf, zur Verfügung steht. Der Begriff "Bioverfügbarkeit" gibt hierbei an, ob und wie schnell sowie in welchem Umfang beispielsweise Zucker aufgenommen, d.h. resorbiert, respektive nicht resorbiert werden.

Um eine solche intestinale Zuckerresorption zu reduzieren, wurden in der Vergangenheit unterschiedliche, jedoch nicht befriedigende Versuche anhand von Anthocyaninen und/oder Delphinidinen unternommen, wie beispielsweise aus der US 2014/0128333 A1 hervorgeht.

Wang H. et al. beschreibt die Aktivität von Extrakten aus der Guave auf Verdauungsenzyme ("α-Glucosidase and α-amylase inhibitory activities of guava leaves", Food Chemistry, Volume 123, Issue 1, 1 November 2010, Pages 6-13, https://doi.org/10.1016/j.foodchem.2010.03.088).

Die Aufgabe der Erfindung besteht darin eine Zusammensetzung anzugeben, die für eine Herstellung eines Nahrungsergänzungsmittels geeignet ist, und in effektiver Weise eine Einstellbarkeit der Bioverfügbarkeit von Zucker ermöglicht. Ferner ist es eine Aufgabe der Erfindung ein mit einer solchen Zusammensetzung versehenes Nahrungsergänzungsmittel, eine Verwendung einer solchen Zusammensetzung zur Herstellung eines Nahrungsergänzungsmittels sowie ein Verfahren zur Herstellung eines Nahrungsergänzungsmittels anzugeben.

Diese Aufgabe wird durch ein Nahrungsergänzungsmittel gemäß Patentanspruch 1 gelöst.

Insbesondere wird die erfindungsgemäße Aufgabe durch ein Nahrungsergänzungsmittel, umfassend eine Zusammensetzung zur Reduzierung und/oder Hemmung einer intestinalen Glucose-Resorption gelöst, wobei die Zusammensetzungein Guaijaverin aufweisendes Guave-Extrakt sowie ein wenigstens Phloretin aufweisendes Apfelextrakt enthält, wobei das Guaijaverin aufweisende Extrakt aus den Blättern und/oder aus der Frucht der Echten Guave (Psidium Guajava) gewonnen ist,
wobei das Nahrungsergänzungsmittel eine Guave-Extrakt-Konzentration im Bereich von 0,1 mg/kg bis 1000 mg/kg aufweist, wobei das Extrakt eine Guaijaverin-Konzentration im Bereich von 100 ng/kg bis 1000 µg/kg aufweist,
und wobei das Apfelextrakt eine Phloretin-Konzentration im Bereich von 1 mg/kg bis 1000 mg/kg aufweist. Die Guaijaverin-Konzentration ist in der Zusammensetzung in einer zumindest physiologisch wirksamen Konzentration oder in einer höheren Konzentration enthalten, sofern die Zusammensetzung zur Bereitung eines Nahrungsergänzungsmittels oder zum Gebrauch als Nahrungsergänzungsmittel auf eine Gebrauchskonzentration verdünnt wird.

Die Zusammensetzung enthält wenigstens ein Flavonoid aus Apfel, Phloretin. Die Guaijaverin-Konzentration und die Flavonoid-Konzentration ist in der Zusammensetzung in einer zumindest physiologisch wirksamen Konzentration oder in einer höheren Konzentration enthalten, sofern die Zusammensetzung zur Bereitung eines Nahrungsergänzungsmittels oder zum Gebrauch als Nahrungsergänzungsmittel auf eine Gebrauchskonzentration verdünnt wird.

Die Zusammensetzung enthält ein Guaijaverin aufweisendes Extrakt, das aus den Blättern und/oder aus der Frucht der Echten Guave (Psidium Guajava) gewonnen ist. Basis zur Herstellung des Guave Fruchtextraktes kann Guavepüree bzw. Guavefruchtmus sein. Eine Verwendung von Fruchtmus oder Püree der Frucht der Echten Guave ist erfindungsgemäß besonders bevorzugt, da sich ein solches Fruchtmus oder Püree einfach und kostengünstig herstellen lässt. Hierbei kann beispielsweise wie in der US 2009/0186110 A1 in Beispiel 2 beschrieben, vorgegangen werden.

Des Weiteren enthält die Zusammensetzung ferner wenigstens ein Phloretin aufweisendes Apfelextrakt, das aus der Frucht eines Kulturapfel (Malus Domestica) in prinzipiell derselben Weise gewonnen werden kann wie Guave-Extrakt. Zu diesem Zweck kann aus einem Kulturapfel beispielsweise ein Püree oder ein Mus hergestellt werden, das sodann mit einem Lösungsmittel, beispielsweise einem Alkohol, wie Methanol oder Ethanol, extrahiert wird. Dieses Lösungsmittel wird nach erfolgter Extraktion aus dem Kulturapfel abgezogen. Die Verwendung von Ethanol anstelle von Methanol zur Extraktion ist bevorzugt. Das finale Apfelextrakt eine wässrige Basis.

Zur Herstellung des Extraktes der echten Guave wird ein alkoholisches Lösungsmittel, insbesondere Ethanol, verwendet. Alternativ zu Ethanol kann erfindungsgemäß, jedoch nicht bevorzugt, auch Methanol oder ein anderer kurzkettiger Alkohol verwendet werden. Die Lösungsmittel werden im Zuge der Extrakt-Herstellung in der Folge jedoch wieder entfernt, und der finale Extrakt hat eine wässrige Basis.

Es sei an dieser Stelle erwähnt, dass das Guave-Extrakt und das optional vorhandene Apfelextrakt entweder separat hergestellt und anschließend vermischt werden können. Alternativ ist es ebenso möglich ein Püree oder Mus aus der Guave-Frucht und der Apfelfrucht herzustellen, das sodann extrahiert wird, um eine Mischung von Guave-Extrakt und Apfelextrakt zu erzeugen.

In überraschender Weise konnten die Erfinder herausfinden, dass eine Zusammensetzung, die erfindungsgemäß Guave-Extrakt, enthält, geeignet ist, eine gezielte Hemmung des Glucosetransports in den Darmzellen von Säugetieren, d.h. in menschlichen und tierischen Darmzellen zu bewirken. Diesbezüglich konnten die Erfinder im Rahmen ihrer erfinderischen Tätigkeit nachweisen, dass Guave-Extrakt, besonders gut zur Hemmung der Zuckerresorption, insbesondere der Glucoseresorption, geeignet ist, da Guave-Extrakt weder durch Magensaft noch durch das im Darm vorliegende Milieu eine signifikante Wirkungseinbuße erfährt, sondern seine physiologisch wirksame Aktivität beibehält und geeignet ist den Glucose-Transporter GLUT2, durch den normalerweise Glucose aus dem Dünndarm in die Blutbahn transportiert wird, zu hemmen, mit der Folge, dass die Aufnahme von Glucose gehemmt wird und daraus resultierend die Konzentration von Glucose im Blutkreislauf nicht so stark steigt wie in Abwesenheit von Guave Extrakt. Aufgrund der reduzierten Aufnahme von Glucose in den Blutkreislauf wird auch der Glucosetransport zu Zielzellen, wie beispielsweise Muskel- und Fettzellen, beeinflusst, so dass die erfindungsgemäße Zusammensetzung auch für ein Gewichtsregime geeignet ist.

In überraschender Weise ergab sich außerdem, dass auch eine Zusammensetzung, die erfindungsgemäß Guave-Extrakt in Kombination mit Apfelextrakt, enthält, geeignet ist, eine gezielte Hemmung des Glucosetransports in den Darmzellen von Säugetieren, d.h. in menschlichen und tierischen Darmzellen zu bewirken. Diesbezüglich konnten die Erfinder im Rahmen ihrer erfinderischen Tätigkeit nachweisen, dass die Kombination von Guave-Extrakt mit Apfelextrakt, besonders gut zur Hemmung der Zuckerresorption, insbesondere der Glucoseresorption, geeignet ist und eine gegenseitige synergistische Wirkung hat. Darüber hinaus wird Guave-Extrakt weder durch Magensaft noch durch das im Darm vorliegende Milieu angegriffen und erfährt keine signifikante Wirkungseinbuße, sondern behält seine physiologisch wirksame Aktivität bei und ist in Kombination mit Apfelextrakt besonders gut geeignet den Glucose-Transporter GLUT2, durch den normalerweise Glucose aus dem Dünndarm in die Blutbahn transportiert wird, zu hemmen, mit der Folge, dass die Aufnahme von Glucose in die Blutbahn gehemmt wird und daraus resultierend die Konzentration von Glucose im Blutkreislauf nicht so stark steigt wie in Abwesenheit der erfindungsgemäßen Zusammensetzung aus Guaijaverin in Kombination mit Phloretin bzw. Guave-Extrakt in Kombination mit Apfelextrakt. Aufgrund der reduzierten Aufnahme von Glucose in den Blutkreislauf wird auch der Glucosetransport zu Zielzellen, wie beispielsweise Muskel- und Fettzellen, beeinflusst, so dass die erfindungsgemäße Zusammensetzung auch für ein Gewichtsregime geeignet ist.

Die Zusammensetzung und/oder das Extrakt können, sofern diese/dieses ein Lösungsmittel aufweist, in flüssiger Form vorliegen. Alternativ können die Zusammensetzung und/oder das Extrakt eine feste, insbesondere pulverförmige Konsistenz aufweisen. Da die Zusammensetzung eine definierte Konzentration an Guaijaverin und anderen sekundären Pflanzeninhaltsstoffen aufweist, ist auf diese Weise eine einfache Dosierung der Zusammensetzung möglich, um ein Nahrungsergänzungsmittel herzustellen oder die Zusammensetzung in einer gebrauchsfertigen Dosierung, respektive Mischung, einzusetzen. Die Zusammensetzung weist eine definierte Konzentration an Guaijaverin, anderen sekundären Guave-Pflanzeninhaltsstoffen sowie Phloretin und anderen sekundären Apfel-Pflanzeninhaltsstoffen auf.

Darüber hinaus kann die Zusammensetzung ferner eine oder mehrere Zink- und/oder Chromverbindung(en), insbesondere in Form ihrer Salze, aufweisen. Eine solche Kombination von Zink- und/oder Chromverbindung(en) mit Guave-Extrakt, respektive Guaijaverin, optional mit Guave- und Apfelextrakt, respektive Guaijaverin und Phloretin, kann im Hinblick auf ein Gewichtsmanagement als vorteilhaft betrachtet werden, da Zink einerseits eine verbesserte Einlagerung von Insulin in den Betazellen der Langerhans'schen Inselzellen des Pankreas begünstigt und andererseits, wie auch Chrom, eine Insulinsensitivität der Muskel-und Fettzellen verbessert. Auf diese Weise kann der Glucose-Stoffwechsel durch einen Zusatz von Zink und/oder Chrom positiv beeinflusst werden.

Das Guave-Extrakt weist eine Guaijaverin-Konzentration im Bereich von 100 ng/kg bis 1000 µg/kg, vorzugsweise im Bereich von 1 µg/kg bis 350 µg/kg und besonders bevorzugt im Bereich von 5 µg/kg bis 80 µg/kg auf. Anhand dieses Guave-Extrakts kann auf einfache Weise ein Nahrungsergänzungsmittel mit einer definierten Guaijaverin-Konzentration hergestellt werden.

Das Apfelextrakt weist eine Phloretin-Konzentration im Bereich von 1 mg/kg bis 1000 mg/kg, vorzugsweise im Bereich von 1 mg/kg bis 500 mg/kg und besonders bevorzugt im Bereich von 10 mg/kg bis 350 mg/kg auf. Anhand dieses Guave-Extrakts in Kombination mit dem Apfelextrakt kann auf einfache Weise ein Nahrungsergänzungsmittel mit einer definierten Guaijaverin- und Phloretin-Konzentration hergestellt werden.

Gemäß einer Ausführungsform der Erfindung kann die Zusammensetzung oder das Extrakt, das seinerseits nach seiner Extraktion aufgrund vorhandener ätherischer Öle eine ölige Konsistenz aufweist, gefriergetrocknet sein. Durch eine solche Behandlung kann die Zusammensetzung oder das Extrakt, je nachdem was gefriergetrocknet wurde, in einen pulvrigen Zustand überführt werden, was zu einem rieselfähigen Produkt führt, das sich einfach dosieren lässt.

Demgemäß kann die Zusammensetzung oder das Extrakt erfindungsgemäß eine flüssige, pastöse oder feste, insbesondere pulverförmige, Konsistenz aufweisen. In diesem Zusammenhang sei betont, dass die Zusammensetzung und/oder das Extrakt, wie vorerwähnt, als Feststoff oder pastöser Stoff vorliegen kann. Die Zusammensetzung bzw. das Extrakt sind jedoch auch erfindungsgemäß wirksam, wenn diese in einem Lösungsmittel, das wässrig und/oder alkoholisch, insbesondere ethanolisch, sein kann, gelöst sind. Eine derartige flüssige Zubereitung der Zusammensetzung bzw. des erfindungsgemäß verwendeten Guave-Extrakts kann mit einer definierten Wirkstoffkonzentration eingestellt werden und ist in vorteilhafter Weise gut dosierbar.

Das Nahrungsergänzungsmittel kann pulverförmig oder fluidförmig ausgebildet sein, wobei unter fluidförmig erfindungsgemäß auch eine Dispersion, eine Emulsion sowie eine Lösung zu verstehen ist, so dass sich das Nahrungsergänzungsmittel in vorteilhafter Weise einfach dosieren lässt. Das Nahrungsergänzungsmittel kann hierbei als Konzentrat oder als bereits gebrauchsfertig verdünntes Produkt vorgesehen sein.

Erfindungsgemäß hat das Nahrungsergänzungsmittel, bezogen auf ein gebrauchsfertig verdünntes Produkt, eine Guave-Extrakt-Konzentration im Bereich von 0,1 mg/kg bis 1000 mg/kg, vorzugsweise im Bereich von 1 mg/kg bis 500 mg/kg und besonders bevorzugt im Bereich von 10 mg/kg bis 350 mg/kg

Darüber hinaus kann das Nahrungsergänzungsmittel alternativ und/oder zusätzlich zu der erfindungsgemäßen Zusammensetzung eine oder mehrere Zink- und/oder Chromverbindung(en), insbesondere in Form ihrer Salze, aufweisen. Dies ist insbesondere dann vorteilhaft, wenn die erfindungsgemäße Zusammensetzung selbst kein Zink und/oder Chrom oder nur eine geringe Menge an Zink- und/oder Chromverbindung(en) enthält.

Eine Gesamtkonzentration von Zink in der oder den Zinkverbindung(en) pro 100 Gramm Nahrungsergänzungsmittel liegen erfindungsgemäß im Bereich von 1 mg bis 250 mg, vorzugsweise im Bereich von 33 mg bis 200 mg und besonders bevorzugt im Bereich von 100 mg bis 149 mg.

Eine entsprechende Gesamtkonzentration von Chrom in der oder den Chromverbindung(en) pro 100 Gramm Nahrungsergänzungsmittel liegen erfindungsgemäß im Bereich von 10 µg bis 1000 µg, vorzugsweise im Bereich von 450 µg bis 900 mg und besonders bevorzugt im Bereich von 650 µg bis 896 µg.

Insbesondere kann das erfindungsgemäße Nahrungsergänzungsmittel einen oder mehrere der folgenden Inhaltsstoffe aufweisen, wobei diese Inhaltsstoffe folgendes umfassen: Acerolaextraktpulver, insbesondere Maltodextrin, Vitamin C, Acerolaextrakt; Algenpulver; Apfelfasern; Aroma; Beta-Karotin; Biotin; Chrompicolinat; Dextrose; Eisencitrat; Erbsenfasern; Farbstoff, insbesondere Beta-Carotin; Folsäure; Fruktose; Gemüsepulver, insbesondere Pulver aus Brokkoli, Weißkohl, Karotten, insbesondere in Kombination mit Maltodextrin, Karotten, Paprika, Spinat, Tomaten; Grünteeextrakt; Guaranaextraktpulver, insbesondere in Kombination mit Maltodextrin, Guaranaextrakt, Koffein; Gummi Arabicum; Haferkleie; Inulin; Kaliumcitrat; Kalziumkarbonat; Kalziumlaktat; Kupfergluconat; Kurkuma-Extrakt mit gamma-Cyclodextrin; Inulin; Magnesiumcitrat; Magnesiumkarbonat; Mangangluconat; Milchsäurekulturen, insbesondere Lactobacillus acidophilus, Lactobacillus reuteri; Multienzymkomplex, insbesondere Amylase, Lactase, Protease, Cellulase, Lipase; Natriumselenit; Niacin; Pantothensäure; Reiskleie; Rote Bete Pulver, insbesondere Rote-Bete Saftkonzentrat ,Maltodextrin, Säureregulator, insbesondere Zitronensäure; Säuerungsmittel, insbesondere Zitronensäure; Selenhefe; Süßungsmittel, insbesondere Steviolglycoside, Aroma; Traubenkernextrakt; Verdickungsmittel, insbesondere Guarkernmehl, Pektin; Vitamin B1; Vitamin B12; Vitamin B2; Vitamin B6; Vitamin C; Vitamin D3; Vitamin E; Zinkgluconat.

Darüber hinaus wird auch ein Verfahren zur Herstellung eines Nahrungsergänzungsmittels offenbart, wobei das Verfahren die folgenden Schritte umfasst:
- Herstellen und/oder Bereitstellen einer Zusammensetzung gemäß vorstehenden Ausführungen; und
- Vermischen der Zusammensetzung mit einer oder mehreren der folgenden Inhaltsstoffe, die folgendes umfassen: Acerolaextraktpulver, insbesondere Maltodextrin, Vitamin C, Acerolaextrakt; Algenpulver; Apfelfasern; Aroma; Beta-Karotin; Biotin; Chrompicolinat; Dextrose; Eisencitrat; Erbsenfasern; Farbstoff, insbesondere Beta-Carotin; Folsäure; Fruktose; Gemüsepulver, insbesondere Pulver aus Brokkoli, Weißkohl, Karotten, insbesondere in Kombination mit Maltodextrin, Karotten, Paprika, Spinat, Tomaten; Grünteeextrakt; Guaranaextraktpulver, insbesondere in Kombination mit Maltodextrin, Guaranaextrakt, Koffein; Gummi Arabicum; Haferkleie; Inulin; Kaliumcitrat; Kalziumkarbonat; Kalziumlaktat; Kupfergluconat; Kurkuma-Extrakt mit gamma-Cyclodextrin; Inulin; Magnesiumcitrat; Magnesiumkarbonat; Mangangluconat; Milchsäurekulturen, insbesondere Lactobacillus a-cidophilus, Lactobacillus reuteri; Multienzymkomplex, insbesondere Amylase, Lactase, Protease, Cellulase, Lipase; Natriumselenit; Niacin; Pantothensäure; Reiskleie; Rote Bete Pulver, insbesondere Rote-Bete Saftkonzentrat ,Maltodextrin, Säureregulator, insbesondere Zitronensäure; Säuerungsmittel, insbesondere Zitronensäure; Selenhefe; Süßungsmittel, insbesondere Steviolglycoside, Aroma; Traubenkernextrakt; Verdickungsmittel, insbesondere Guarkernmehl, Pektin; Vitamin B1; Vitamin B12; Vitamin B2; Vitamin B6; Vitamin C; Vitamin D3; Vitamin E; Zinkgluconat; um das Nahrungsergänzungsmittel zu bereiten.

Das erfindungsgemäße Nahrungsergänzungsmittel kann erfindungsgemäß zu einem pulverförmigen Nahrungsergänzungsmittel verarbeitet werden. Alternativ ist es erfindungsgemäß auch möglich die Inhaltsstoffe des Nahrungsergänzungsmittels, je nach Inhaltsstoffen, in Form einer wässrigen und/oder alkoholischen Dispersion, Emulsion oder Lösung zuzubereiten. Hierbei ist es ferner möglich das Nahrungsergänzungsmittel als Konzentrat oder alternativ bereits in einer gebrauchsfertigen Konzentration herzustellen.

Weitere Ausführungsformen der Erfindung ergeben sich aus den Unteransprüchen.

Nachfolgend wird die Erfindung anhand von Ausführungsbeispielen näher beschrieben.

### Ausführungsbeispiel 1

Nachfolgend sind Zutaten eines ersten Ausführungsbeispiels aufgeführt, bei dem es sich um ein Nahrungsergänzungsmittel in Pulverform handelt. Die Zutaten sind neben Vitaminen, Mineralstoffen, Kohlehydraten und Ballaststoffen insbesondere Fruktose, Gummi Arabicum, Haferkleie, Erbsenfasern, Verdickungsmittel (Guarkernmehl, Pektin), Säuerungsmittel (Zitronensäure), Guaranaextraktpulver (Maltodextrin, Guaranaextrakt, Koffein), Aroma, Acerolaextraktpulver (Maltodextrin, Vitamin C, Acerolaextrakt), Vitamin C, Rote Bete Pulver (Rote-Bete Saftkonzentrat ,Maltodextrin, Säureregulator (Citronensäure)), Apfelfaser, Gemüsepulver (Brockoli Weißkohl, Karotten (Maltodextrin, Karotten), Paprika, Spinat, Tomaten), Multienzymkomplex (Amylase, Lactase, Protease, Cellulase, Lipase), Inulin, Reiskleie, Milchsäurekulturen (Lactobacillus acidophilus, Laciobacillus reuteri), Kurkuma-Extrakt mit gamma-Cyclodextrin, Süßungsmittel (Steviolglycoside (Steviolglycoside, Aroma)), Selenhefe, Niacin, Grünteeextrakt, Algenpulver, Vitamin E, Beta-Carotin, Pantothensäure, Traubenkernextrakt, Vitamin B6, Vitamin B2, Vitamin B1, Folsäure, Biotin und Vitamin B12. Des Weiteren ist in dem Nahrungsergänzungsmittel gemäß diesem Ausführungsbeispiel Guave-Extrakt mit einer Guaijaverin-Konzentration von 100 mg/kg bezogen auf das Volumen des Guave-Extrakts enthalten. Optional kann in dem Nahrungsergänzungsmittel Apfelextrakt mit einer Phloretin-Konzentration von 100 mg/kg bezogen auf das Volumen des Apfelextrakts enthalten sein.

Weitere Nährwertangaben des Nahrungsergänzungsmittels sind in nachfolgender Tabelle 1 wiedergegeben, wobei sich die jeweiligen Angaben auf 100 g des Nahrungsergänzungsmittels beziehen:

**Tabelle 1**

| | |
|---|---|
| Fett | < 0,4 g |
| Kohlenhydrate | 53 g |
| Ballaststoffe | 33 g |
| Eiweiß | 1,0 g |
| Salz (Natriumchlorid) | < 0,3 g |
| Selen | 200 µg |
| Vitamin C | 1000 mg |
| Niacin | 340 mg NE |
| Vitamin E | 67 mg alpha-TE |
| Pantothensäure | 60 mg |
| Vitamin B1 | 14 mg |
| Vitamin B2 | 16 mg |
| Vitamin B6 | 20 mg |
| Vitamin B12 | 10 µg |
| Vitamin A (aus Provitamin A) | 2220 µg RE |
| Folsäure | 2000 µg |
| Biotin | 1500 µg |
| Koffein, insbesondere aus Guaranaextraktpulver | 200 mg |

### Ausführungsbeispiel 2

Nachfolgend sind Zutaten eines zweiten Ausführungsbeispiels aufgeführt, bei dem es sich um ein Nahrungsergänzungsmittel in Pulverform handelt. Die Zutaten sind neben Vitaminen, Mineralstoffen, Kohlehydraten und Ballaststoffen insbesondere Fruktose, Säuerungsmittel (Zitronensäure), Kalziumkarbonat, Magnesiumkarbonat, Kalziumlaktat, Kaliumcitrat, Aroma, Magnesiumcitrat, Zinkgluconat, Süßungsmittel (Steviolglycoside (Steviolglycoside, Aroma)), Eisencitrat, Mangangluconat, Kupfergluconat, Chrompicolinat, Farbstoff (Beta-Carotin), Natriumselenit, Vitamin D3. Des Weiteren ist in dem Nahrungsergänzungsmittel gemäß diesem zweiten Ausführungsbeispiel Guave-Extrakt mit einer Guaijaverin-Konzentration von 25 mg/kg bezogen auf das Volumen des Guave-Extrakts enthalten. Optional kann in dem Nahrungsergänzungsmittel Apfelextrakt mit einer Phloretin-Konzentration von 100 mg/kg bezogen auf das Volumen des Apfelextrakts enthalten sein.

Weitere Nährwertangaben des Nahrungsergänzungsmittels sind in nachfolgender Tabelle 2 wiedergegeben, wobei sich die jeweiligen Angaben auf 100 g des Nahrungsergänzungsmittels beziehen:

**Tabelle 2**

| | |
|---|---|
| Fett | < 0,5 g |
| Kohlenhydrate | 49 g |
| Eiweiß | < 0,1 g |
| Salz (Natriumchlorid) | < 0,01 g |
| Kalzium | 4000 mg |
| Magnesium | 2000 mg |
| Eisen | 31 mg |
| Zink | 149 mg |
| Kupfer | 10000 µg |
| Mangan | 15 mg |
| Chrom | 896 µg |
| Selen | 251 µg |
| Vitamin D | 112 µg |

### Ausführungsbeispiel 3

Nachfolgend sind Zutaten eines dritten Ausführungsbeispiels aufgeführt, bei dem es sich um ein Nahrungsergänzungsmittel in Pulverform handelt. Die Zutaten sind neben Vitaminen, Mineralstoffen, Kohlehydraten und Ballaststoffen insbesondere Fruktose, Gummi Arabicum, Haferkleie, Erbsenfasern, Verdickungsmittel (Guarkernmehl, Pektin), Säuerungsmittel (Citronensäure), Acerolaextraktpulver (Maltodextrin, Vitamin C, Acerolaextrakt), Aroma, Apfelfaser, Gemüsepulver (Brokkoli, Weißkohl, Karotten (Maltodextrin, Karotten), Paprika, Spinat, Tomaten), Multienzymkomplex (Amylase, Lactase, Protease, Cellulase, Lipase), Vitamin C, Inulin, Reiskleie, Süßungsmittel (Steviolglycoside (Steviolglycoside, Aroma)), Milchsäurekulturen (Lactobacillus acidophilus, Lactobacillus reuteri), Kurkuma-Extrakt mit gamma-Cyclodextrin, Selenhefe, Grünteeextrakt, Vitamin E, Beta-Carotin, Traubenkernextrakt. Des Weiteren ist in dem Nahrungsergänzungsmittel gemäß diesem dritten Ausführungsbeispiel Guave-Extrakt mit einer Guaijaverin-Konzentration von 250 mg/kg bezogen auf das Volumen des Guave-Extrakts enthalten. Optional kann in dem Nahrungsergänzungsmittel Apfelextrakt mit einer Phloretin-Konzentration von 100 mg/kg bezogen auf das Volumen des Apfelextrakts enthalten sein.

Weitere Nährwertangaben des Nahrungsergänzungsmittels sind in nachfolgender Tabelle 3 wiedergegeben, wobei sich die jeweiligen Angaben auf 100 g des Nahrungsergänzungsmittels beziehen:

**Tabelle 3**

| | |
|---|---|
| Fett | < 0,5 g |
| Kohlenhydrate | 45 g |
| Ballaststoffe | 42 g |
| Eiweiß | 1,2 g |
| Salz (Natriumchlorid) | < 0,3 g |
| Selen | 250 µg |
| Vitamin C | 500 mg |
| Vitamin E | 83 mg alpha-TE |
| Vitamin A (aus Provitamin A) | 2775 µg RE |

### Ausführungsbeispiel 4

Nachfolgend sind Zutaten eines vierten Ausführungsbeispiels aufgeführt, bei dem es sich um ein Nahrungsergänzungsmittel in Pulverform handelt. Die Zutaten sind neben Vitaminen, Mineralstoffen, Kohlehydraten und Ballaststoffen insbesondere Dextrose, Guaranaextraktpulver (Maltodextrin, Guaranaextrakt, Koffein), Säuerungsmittel (Zitronensäure), Rote Bete Pulver (Rote-Bete Saftkonzentrat, Maltodextrin, Säureregulator (Zitronensäure), Vitamin C, Aroma, Niacin, Süßungsmittel (Acesulfam K), Pantothensäure, Algenpulver, Vitamin B6, Vitamin B2, Vitamin B1, Folsäure, Biotin und Vitamin B12. Des Weiteren ist in dem Nahrungsergänzungsmittel gemäß diesem vierten Ausführungsbeispiel Guave-Extrakt mit einer Guaijaverin-Konzentration von 500 mg/kg bezogen auf das Volumen des Guave-Extrakts enthalten. Optional kann in dem Nahrungsergänzungsmittel Apfelextrakt mit einer Phloretin-Konzentration von 100 mg/kg bezogen auf das Volumen des Apfelextrakts enthalten sein.

Weitere Nährwertangaben des Nahrungsergänzungsmittels sind in nachfolgender Tabelle 4 wiedergegeben, wobei sich die jeweiligen Angaben auf 100 g des Nahrungsergänzungsmittels beziehen:

**Tabelle 4**

| | |
|---|---|
| Vitamin C | 750 mg |
| Niacin | 340 mg NE |
| Pantothensäure | 60 mg |
| Vitamin B1 | 14 mg |
| Vitamin B2 | 16 mg |
| Vitamin B6 | 20 mg |
| Vitamin B12 | 10 µg |
| Folsäure | 2000 µg |
| Biotin | 1500 µg |
| Koffein, insbesondere aus Guaranaextraktpulver | 200 mg |

Anhand dieser Ausführungsbeispiele konnte gezeigt werden, dass eine intestinale Aufnahme von Glucose durch die Wirkung von Guaijaverin und/oder Guave-Extrakt im Darm von Säugetieren in die Blutbahn selbst bei einer Konzentration von 25 mg/kg Guaijaverin bezogen auf das Guave-Extrakt unmittelbar nach dem Extrahieren und Abziehen des Lösungsmittels bzw. Extraktionsmittels, noch um 50 % reduziert ist. Bei einer Guaijaverin-Konzentration von 250 mg/kg bis 500 mg/kg, bezogen auf das Guave-Extrakt nach dem Extrahieren und Abziehen des Lösungsmittels bzw. Extraktionsmittels konnte die intestinale Aufnahme von Glucose gegenüber einer Glucoseaufnahme vom Darm in die Blutbahn ohne die Wirkung der erfindungsgemäßen Zusammensetzung um bis zu über 80 % gesenkt werden.

Bei der optionalen zusätzlichen Verwendung von Phloretin und/oder Apfelextrakt konnte gezeigt werden, dass eine intestinale Aufnahme von Glucose durch die Wirkung von Guaijaverin und/oder Guave-Extrakt in Kombination mit Phloretin und/oder Apfelextrakt im Darm von Säugetieren in die Blutbahn selbst bei einer Konzentration von 25 mg/kg Guaijaverin bezogen auf das Guave-Extrakt unmittelbar nach dem Extrahieren und Abziehen des Lösungsmittels bzw. Extraktionsmittels in Kombination mit einer Konzentration von 100 mg/kg Phloretin bezogen auf das Apfelextrakt unmittelbar nach dem Extrahieren und Abziehen des Lösungsmittels bzw. Extraktionsmittels, noch um mehr als 50 % reduziert ist. Bei einer Guaijaverin-Konzentration von 250 mg/kg bis 500 mg/kg, bezogen auf das Guave-Extrakt nach dem Extrahieren und Abziehen des Lösungsmittels bzw. Extraktionsmittels in Kombination mit einer Konzentration von 100 mg/kg Phloretin bezogen auf das Apfelextrakt unmittelbar nach dem Extrahieren und Abziehen des Lösungsmittels bzw. Extraktionsmittels konnte die intestinale Aufnahme von Glucose gegenüber einer Glucoseaufnahme vom Darm in die Blutbahn ohne die Wirkung der erfindungsgemäßen Zusammensetzung um nahezu 90 % gesenkt werden.

## Patentansprüche

1. Nahrungsergänzungsmittel, umfassend eine Zusammensetzung zur Reduzierung und/oder Hemmung einer intestinalen Glucose-Resorption,
wobei die Zusammensetzung ein Guaijaverin aufweisendes Guave-Extrakt sowie ein wenigstens Phloretin aufweisendes Apfelextrakt enthält, wobei das Guaijaverin aufweisende Extrakt aus den Blättern und/oder aus der Frucht der Echten Guave (Psidium Guajava) gewonnen ist,
wobei das Nahrungsergänzungsmittel eine Guave-Extrakt-Konzentration im Bereich von 0,1 mg/kg bis 1000 mg/kg aufweist, wobei das Extrakt eine Guaijaverin-Konzentration im Bereich von 100 ng/kg bis 1000 µg/kg aufweist,
und wobei das Apfelextrakt eine Phloretin-Konzentration im Bereich von 1 mg/kg bis 1000 mg/kg aufweist.

2. Nahrungsergänzungsmittel nach dem vorhergehenden Anspruch,
**dadurch gekennzeichnet, dass**
die Zusammensetzung weitere sekundäre Pflanzeninhaltsstoffe aus Guave enthält.

3. Nahrungsergänzungsmittel nach einem der vorhergehenden Ansprüche,
**dadurch gekennzeichnet, dass**
das Apfelextrakt insbesondere aus der Art Kulturapfel (Malus Domestica) gewonnen ist, wobei die Zusammensetzung gegebenenfalls weitere sekundäre Pflanzeninhaltsstoffe aus Apfel enthält.

4. Nahrungsergänzungsmittel nach einem der vorhergehenden Ansprüche,
**dadurch gekennzeichnet, dass**
das Extrakt aus den Blättern und/oder der Frucht der Echten Guave, durch Extraktion eines aus den Blättern und/oder der Frucht hergestellten Pürees und/oder Mus mit einem alkoholischen Lösungsmittel, insbesondere Methanol und/oder Ethanol, hergestellt ist.

5. Nahrungsergänzungsmittel nach einem der vorhergehenden Ansprüche, **dadurch gekennzeichnet, dass**
die Zusammensetzung eine oder mehrere Zink- und/oder Chromverbindung(en), insbesondere in Form ihrer Salze, aufweist.

6. Nahrungsergänzungsmittel nach einem der vorhergehenden Ansprüche,
**dadurch gekennzeichnet, dass**
das Extrakt eine Guaijaverin-Konzentration im Bereich von 1 µg/kg bis 350 µg/kg und besonders bevorzugt im Bereich von 5 µg/kg bis 80 µg/kg aufweist.

7. Nahrungsergänzungsmittel nach einem der vorhergehenden Ansprüche,
**dadurch gekennzeichnet, dass**
das Apfelextrakt eine Phloretin-Konzentration im Bereich von 1 mg/kg bis 500 mg/kg und besonders bevorzugt im Bereich von 10 mg/kg bis 350 mg/kg aufweist.

8. Nahrungsergänzungsmittel nach einem der vorhergehenden Ansprüche, **dadurch gekennzeichnet, dass**
die Zusammensetzung oder das Extrakt gefriergetrocknet ist.

9. Nahrungsergänzungsmittel nach einem der vorhergehenden Ansprüche,
**dadurch gekennzeichnet, dass**
die Zusammensetzung oder das Extrakt eine flüssige, pastöse oder feste, insbesondere pulverförmige, Konsistenz hat.

10. Nahrungsergänzungsmittel nach einem der vorhergehenden Ansprüche,
**dadurch gekennzeichnet, dass**
das Nahrungsergänzungsmittel pulverförmig oder fluidförmig, insbesondere eine Dispersion, Emulsion oder Lösung, ist.

11. Nahrungsergänzungsmittel nach einem der vorhergehenden Ansprüche,
**dadurch gekennzeichnet, dass**
das Nahrungsergänzungsmittel ein Konzentrat oder ein gebrauchsfertiges Produkt ist.

12. Nahrungsergänzungsmittel nach einem der vorhergehenden Ansprüche,
**dadurch gekennzeichnet, dass**
das Nahrungsergänzungsmittel eine Guave-Extrakt-Konzentration im Bereich von 1 mg/kg bis 500 mg/kg und besonders bevorzugt im Bereich von 10 mg/kg bis 350 mg/kg aufweist.

13. Nahrungsergänzungsmittel nach einem der vorhergehenden Ansprüche,
**dadurch gekennzeichnet, dass**
das Nahrungsergänzungsmittel alternativ und/oder zusätzlich zu der Zusammensetzung eine oder mehrere Zink- und/oder Chromverbindung(en), insbesondere in Form ihrer Salze, aufweist.

14. Nahrungsergänzungsmittel nach Anspruch 13,
**dadurch gekennzeichnet, dass**
eine Gesamtkonzentration von Zink in der oder den Zinkverbindung(en) pro 100 Gramm Nahrungsergänzungsmittel im Bereich von 1 mg bis 250 mg, vorzugsweise im Bereich von 33 mg bis 200 mg und besonders bevorzugt im Bereich von 100 mg bis 149 mg liegt.

15. Nahrungsergänzungsmittel nach Anspruch 13,
**dadurch gekennzeichnet, dass**
eine Gesamtkonzentration von Chrom in der oder den Chromverbindung(en) pro 100 Gramm Nahrungsergänzungsmittel im Bereich von 10 µg bis 1000 µg, vorzugsweise im Bereich von 450 µg bis 900 mg und besonders bevorzugt im Bereich von 650 µg bis 896 µg liegt.

## Claims

1. Nutritional supplement, comprising a composition for reducing and/or inhibiting intestinal glucose resorption,
wherein the composition contains a guava extract comprising guaijaverin and at least one apple extract comprising phloretin, wherein the extract comprising guaijaverin is obtained from the leaves and/or from the fruit of the true guava (Psidium guajava),
wherein the nutritional supplement has a guava extract concentration in the range of 0.1 mg/kg to 1000 mg/kg, wherein the extract has a guaijaverin concentration in the range of 100 ng/kg to 1000 µg/kg,
and wherein the apple extract has a phloretin concentration in the range of 1 mg/kg to 1000 mg/kg.

2. Nutritional supplement as claimed in the preceding claim,
**characterized in that**
the composition contains further secondary plant ingredients from guava.

3. Nutritional supplement as claimed in any one of the preceding claims,
**characterized in that**
the apple extract is obtained in particular from the species of the cultivated apple (Malus domestica), wherein the composition possibly contains further secondary plant ingredients from apple.

4. Nutritional supplement as claimed in any one of the preceding claims,
**characterized in that**
the extract is produced from the leaves and/or the fruit of the true guava, by extraction of a purée and/or mash produced from the leaves and/or the fruit using an alcoholic solvent, in particular methanol and/or ethanol.

5. Nutritional supplement as claimed in any one of the preceding claims,
**characterized in that**
the composition comprises one or more zinc and/or chromium compound(s), in particular in the form of their salts.

6. Nutritional supplement as claimed in any one of the preceding claims,
**characterized in that**
the extract has a guaijaverin concentration in the range of 1 µg/kg to 350 µg/kg and particularly preferably in the range of 5 µg/kg to 80 µg/kg.

7. Nutritional supplement as claimed in any one of the preceding claims,
**characterized in that**
the apple extract has a phloretin concentration in the range of 1 mg/kg to 500 mg/kg and particularly preferably in the range of 10 mg/kg to 350 mg/kg.

8. Nutritional supplement as claimed in any one of the preceding claims,
**characterized in that**
the composition or the extract is freeze-dried.

9. Nutritional supplement as claimed in any one of the preceding claims,
**characterized in that**
the composition of the extract has a liquid, pasty, or solid, in particular powdered, consistency.

10. Nutritional supplement as claimed in any one of the preceding claims,
**characterized in that**
the nutritional supplement is powdered or fluid, in particular a dispersion, emulsion, or solution.

11. Nutritional supplement as claimed in any one of the preceding claims,
**characterized in that**
the nutritional supplement is a concentrate or a ready-to-use product.

12. Nutritional supplement as claimed in any one of the preceding claims,
**characterized in that**
the nutritional supplement has a guava extract concentration in the range of 1 mg/kg to 500 mg/kg and particularly preferably in the range of 10 mg/kg to 350 mg/kg.

13. Nutritional supplement as claimed in any one of the preceding claims,
**characterized in that**
the nutritional supplement comprises, alternatively and/or additionally to the composition, one or more zinc and/or chromium compound(s), in particular in the form of their salts.

14. The nutritional supplement as claimed in claim 13,
**characterized in that**
a total concentration of zinc in the zinc compound(s) per 100 g of nutritional supplement is in the range of 1 mg to 250 mg, preferably in the range of 33 mg to 200 mg, and
particularly preferably in the range of 100 mg to 149 mg.

15. The nutritional supplement as claimed in claim 13,
**characterized in that**
a total concentration of chromium in the chromium compound(s) per 100 g of nutritional supplement is in the range of 10 µg to 1000 µg, preferably in the range of 450 µg to 900 mg, and particularly preferably in the range of 650 µg to 896 µg.

## Revendications

1. Complément alimentaire, comprenant une composition pour la réduction et/ou l'inhibition d'une absorption intestinale du glucose, dans lequel la composition contient un extrait de goyave contenant de la guaijavérine et un extrait de pomme contenant au moins de la phlorétine,
dans lequel l'extrait contenant la guaijavérine est obtenu à partir des feuilles et/ou du fruit du goyavier vrai (*Psidium guajava*),
dans lequel le complément alimentaire présente une concentration d'extrait de goyave comprise entre 0,1 mg/kg et 1000 mg/kg, l'extrait présentant une concentration de guaijavérine comprise entre 100 ng/kg et 1000 µg/kg,
et dans lequel l'extrait de pomme présente une concentration de phlorétine comprise entre 1 mg/kg et 1000 mg/kg.

2. Complément alimentaire selon la revendication précédente, **caractérisé en ce que** la composition contient d'autres substances végétales secondaires issues de la goyave.

3. Complément alimentaire selon l'une des revendications précédentes, **caractérisé en ce que** l'extrait de pomme est obtenu en particulier à partir de l'espèce du pommier domestique (*Malus domestica*), la composition contenant éventuellement d'autres substances végétales secondaires issues de la pomme.

4. Complément alimentaire selon l'une des revendications précédentes, **caractérisé en ce que** l'extrait est obtenu à partir des feuilles et/ou du fruit du goyavier vrai par extraction d'une purée et/ou compote obtenue à partir des feuilles et/ou du fruit avec un solvant alcoolique, en particulier du méthanol et/ou de l'éthanol.

5. Complément alimentaire selon l'une des revendications précédentes, **caractérisé en ce que** la composition contient un ou plusieurs composés de zinc et/ou de chrome, en particulier sous la forme de leurs sels.

6. Complément alimentaire selon l'une des revendications précédentes, **caractérisé en ce que** l'extrait présente une concentration de guaijavérine comprise entre 1 µg/kg et 350 µg/kg et de préférence, en particulier, entre 5 µg/kg et 80 µg/kg.

7. Complément alimentaire selon l'une des revendications précédentes, **caractérisé en ce que** l'extrait de pomme présente une concentration de phlorétine comprise entre 1 mg/kg et 500 mg/kg et de préférence, en particulier, entre 10 mg/kg et 350 mg/kg.

8. Complément alimentaire selon l'une des revendications précédentes, **caractérisé en ce que** la composition ou l'extrait est lyophilisé.

9. Complément alimentaire selon l'une des revendications précédentes, **caractérisé en ce que** la composition ou l'extrait a une consistance fluide, pâteuse ou solide, en particulier pulvérulente.

10. Complément alimentaire selon l'une des revendications précédentes, **caractérisé en ce que** le complément alimentaire se présente sous forme de poudre ou de fluide, en particulier d'une dispersion, d'une émulsion ou d'une solution.

11. Complément alimentaire selon l'une des revendications précédentes, **caractérisé en ce que** le complément alimentaire est un concentré ou un produit prêt à l'emploi.

12. Complément alimentaire selon l'une des revendications précédentes, **caractérisé en ce qu'**il présente une concentration d'extrait de goyave comprise entre 1 mg/kg et 500 mg/kg et de préférence, en particulier, entre 10 mg/kg et 350 mg/kg.

13. Complément alimentaire selon l'une des revendications précédentes, **caractérisé en ce qu'**il présente, à la place et/ou en complément de la composition, un ou plusieurs composés de zinc et/ou de chrome, en particulier sous la forme de leurs sels.

14. Complément alimentaire selon la revendication 13, **caractérisé en ce qu'**une concentration totale de zinc dans le ou les composés de zinc, pour 100 grammes de complément alimentaire, est comprise entre 1 mg et 250 mg, de préférence entre 33 mg et 200 mg et en particulier entre 100 mg et 149 mg.

15. Complément alimentaire selon la revendication 13, **caractérisé en ce qu'**une concentration totale de chrome dans le ou les composés de chrome, pour 100 grammes de complément alimentaire, est comprise entre 10 µg et 1000 µg, de préférence entre 450 µg et 900 mg et en particulier entre 650 µg et 896 µg.
